Europäisches Patentamt

European Patent Office

Office européen des brevets

(19)

(11) Publication number: **0 403 678**

**A1**

(12) **EUROPEAN PATENT APPLICATION**

(21) Application number: **89111391.2**

(22) Date of filing: **22.06.89**

(51) Int. Cl.⁵: **B32B 27/08, B65D 71/08**

(43) Date of publication of application:
**27.12.90 Bulletin 90/52**

(84) Designated Contracting States:
**AT BE CH DE ES FR GB GR IT LI LU NL SE**

(71) Applicant: **Oy W. Rosenlew Ab**
**Ulasoori**
**SF-28100 Pori 10(FI)**

(72) Inventor: **Johansson, Tor**
**Katariinankatu 14C 38-39**

**SF-28100 Pori(FI)**
Inventor: **Nyman, Per**
**Mestarintie 6**
**SF-28400 Ulvila(FI)**

(74) Representative: **Bühling, Gerhard, Dipl.-Chem.**
**et al**
**Patentanwaltsbüro Tiedtke-Bühling-Kinne**
**Grupe-Pellmann-Grams-Struif-Winter-Roth**
**Bavariaring 4**
**D-8000 München 2(DE)**

(54) **Shrinking protective wrapping or film.**

(57) The invention relates to a shrinking protective wrapping or film (10, 10', 100) for protecting products (13, 113), particularly packages. One surface (12) of the protective wrapping or film (10) is conventional shrinking plastic material, and the other surface (11) of the protective wrapping is amorphous plastic material or a mixture of amorphous plastic material and polyolefine, which, when being shrunk, does not stick to the products being protected

FIG. 1

FIG. 2

FIG. 3

FIG. 4

FIG. 5

FIG. 6

EP 0 403 678 A1

# Shrinking protective wrapping or film

The present invention relates to a shrinking protective wrapping or film for protecting products, particularly packages.

Protective wrappings or films are used for so-called bundled package lots such as bundled bags or sacks and similar as well as for pallet loads in order to protect packages. When protecting packages by means of for instance protective wrapping which is shrunk around the packages with conventional technique such as heat-sealing or radiation-sealing, in the currently used protective wrappings their inner surface sticks to the packages being protected. When later removing the protective wrapping the packages might easily be damaged.

Efforts has previously been made to eliminate aforementioned problems by for instance putting a sheet of paper between the package and the protective wrapping, which prevents the protective wrapping from sticking to the package. Another known solution is the so-called double wrapping arrangement, in which the inner wrapping does not stick to the packages, because it does not shrink in normal conditions. In this arrangement the outer wrapping is conventional shrinking protective wrapping.

A drawback of both arrangements is the complicated packaging method, which is also uneconomic from the point of view of material consumption and the working time used to the packaging process.

Such an arrangement is also known in which such materials are selected either for the protective wrapping or the plastic bags being packaged that either the density of the protective wrapping material is smaller than the density of the plastic bag material, or the density of the plastic bag material is smaller than the material of the protective wrapping. Even this solution has the drawback that the materials may stick together despite their different densities.

Such an an arrangement is also known in which is the protective wrapping is made of so-called combination film. The inner surface of this kind of combination film is for instance polypropylene. A drawback of this solution of the Prior Art is the difficulty of the shrinking process and its control.

The object of the invention is to provide an improvement to the currently known shrinking protective wrapping and film arrangements. A more detailed object of the invention is to provide such a shrinking protective wrapping of film, in which the sticking of the protective wrapping or film to the products being protected such as packages or to the conventional protective wrapping surrounding a bundled package is reliably prevented.

The objects of the invention are attained with such shrinking protective wrapping or film, whose principal characteristic feature is that one surface of the protective wrapping or film is conventional shrinking plastic material, and the other surface of the protective wrapping is amorphous plastic material or a mixture of amorphous plastic material and polyolefine, which, when being shrunk, does not stick to the products being protected or to the conventional protective wrapping surrounding the bundled package, or the protective wrapping resp. protective film is an one-layer film made of amorphous plastic material or mixture of amorphous plastic material and polyolefine.

In one advantageous embodiment of the invention the percentage of amorphous plastic material is 50% to 100%, preferably 70% to 100%.

The amorphous plastic material may be one of the following amorphous polymers: polyamide, polycarbonate polymethyl metacrylate, polystyrene, polyvinyl chloride, polyisobutene, polypropene (atactic), polyethylene tereftalate, polyurethane, acrylic nitrile butadiene styrene, acrylic nitrile styrene acrylate, polyether imide, polysulphone, polyacrylate, etc. It should be noted, that polyethylene terephtalate polymere may be either amorphous or non-amorphous.

In some applications it has been noted that polystyrene and its mixtures are particularly favourable. One preferred amorphous mixture comprises 75% polystyrene and 25% butadiene.

A shrinking protective wrapping or film in accordance with the invention may be either one-layer film or multi-layer film.

The invention will now be explained in detail with reference to the exemplary embodiments illustrated in the figures of the attached drawing, with no intention to restrict the invention to these details.

Fig. 1 is a schematic illustration of a favourable embodiment of a shrinking protective wrapping in accordance with the invention used to protect a bundled package composed of bags ir sacks.

Fig. 2 is a section view of a favourable embodiment of material for shrinking protective wrapping used in Fig. 1.

Fig. 3 is a section view of another favourable embodiment of a shrinking protective wrapping used in Fig. 1.

Fig. 4 is a schematic illustration of a bundled package, in which the products are packaged in a shrinking protective wrapping in accordance with the invention, and the bundled package is protected with a conventional protective wrapping.

Fig. 5 is a section view of a favourable embodiment of the shrinking protective wrapping material used in Fig. 4.

Fig. 6 is a section view of an alternative embodiment of the shrinking protective wrapping showed in Fig. 1 or the shrinking protective film material used in Fig. 4.

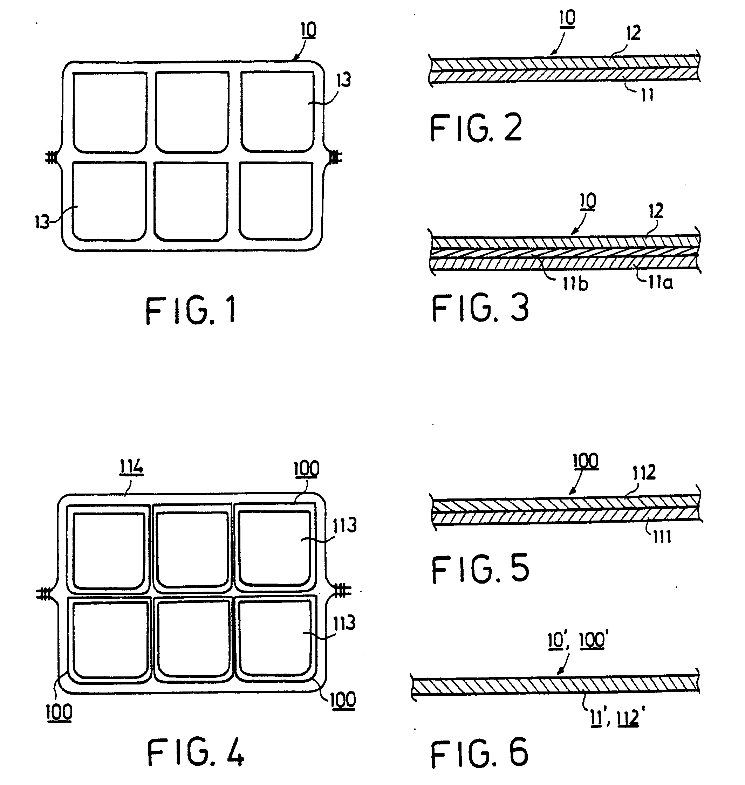

In an embodiment in accordance with Figs. 1 and 2, a shrinking protective wrapping in accordance with the invention is indicated with Ref. No. 10. In this embodiment the products 13 to be protected such as for instance bags or sacks constitute a so called bundled package. The bags 13 are protected with a shrinking protective wrapping 10 in accordance with the invention, which wrapping is shrunk with conventional technique. One surface of the protective wrapping 10, in this embodiment the outer surface 12, is of conventional shrinking plastic material, and the other surface, in this embodiment the inner surface 11, is of amorphous plastic material or mixture of amorphous plastic material and polyolefine, which, when being shrunk, does not stick to packages 13 being protected.

The embodiment shown in Fig. 3 is otherwise the same, but the protective wrapping 10 consists of three-layer film, in which the outer surface is conventional shrinking plastic material, and the inner surface 11a is amorphous plastic material or mixture of amorphous plastic material and polyolefine, which, when shrinking, does not stick to packages 13 being protected. The intermediate layer 11b can be of any plastic material.

In the embodiments shown in Figs. 4 and 5, the products being protected, such as bottles 113 used in pharmaceutical industry, are protected in accordance with the invention with shrinking protective films 100. The products 113 protected by protective films 100 consist a so called bundled package, which is surrounded by a conventional protective wrapping 114. In this embodiment the inner surface 111 of the protective film 100 is of conventional shrinking plastic material, and the outer surface 112 is amorphous plastic material or mixture of amorphous plastic material and polyolefine, which, when shrinking, does not stick to the conventional protective wrapping 114 surrounding the bundled package.

The embodiment shown in Fig. 6 is otherwise the same as the embodiment shown in Figs 1 and 2, but in this embodiment the protective wrapping 10' consists of one-layer film 11', which is amorphous plastic material or mixture of amorphous plastic material and polyolefine, which, when shrinking does not stick to packages being protected. One-layer film 12' shown in Fig. 6 may of course be used in the protective film used in the embodiment in accordance with Fig. 4 as protective film 100', which is composed of single- layer film 112'.

Only a few preferred embodiments of the invention have been described above, and a specialist readily understands that they can be modified in many was within the framework of the inventional idea as defined in the following claims.

The invention relates to a shrinking protective wrapping or film (10, 10', 100) for protecting products (13, 113), particularly packages. One surface (12) of the protective wrapping or film (10) is conventional shrinking plastic material, and the other surface (11) of the protective wrapping is amorphous plastic material or a mixture of amorphous plastic material and polyolefine, which, when being shrunk, does not stick to the products being protected

## Claims

1. A protective wrapping (10, 10', 100) or film for protecting products (13, 113), particularly packages, **characterized in that** one surface (12, 111) of the protective wrapping or film (10, 100) is conventional shrinking plastic material, and the other surface (11, 11a, 112) of the protective wrapping is amorphous plastic material or a mixture of amorphous plastic material and polyolefine, which, when being shrunk, does not stick to the products (13) being protected or to the conventional protective wrapping (114) surrounding the bundled package, or the protective wrapping (10') resp. protective film (100') is an one-layer film (11', 112') made of amorphous plastic material or mixture of amorphous plastic material and polyolefine.

2. A protective wrapping or film in accordance with claim 1, **characterized in that** the percentage of amorphous plastic material is 50% to 100%..

3. A protective wrapping or film in accordance with claim 2, **characterized in that** the percentage of amorphous plastic material is 70% to 100%.

4. A protective wrapping or film in accordance with one of claims 1 to 3, **characterized in that** the amorphous plastic material or the mixture of the amorphous plastic material and polyolefine is selected from the following group: polyamide, polycarbonate polymethyl metacrylate, polystyrene, polyvinyl chloride, polyisobutene, polypropene (atactic), polyethylene tereftalate, polyurethane, acrylic nitrile butadiene styrene, acrylic nitrile styrene acrylate, polyether imide, polysulphone, and polyacrylate.

5. A protective wrapping or film in accordance with claim 4, **characterized in that** the amorphous plastic material is a mixture of polystyrene and butadiene.

6. A protective wrapping or film in accordance with claim 5, **characterized in that** the mixture contains 75% polystyrene and 25% butadiene..

7. A protective wrapping or film in accordance with one of claims 1 to 6, **characterized in that** the outer surface (12) of the protective wrapping (10) is conventional shrinking plastic material, and the inner surface (11) is amorphous plastic material or a mixture of amorphous plastic material.

8. A protective-wrapping or film in accordance with one of claims 1 to 6, **chazacterized in that** the outer surface (12) of the protective wrapping (10) is conventional shrinking plastic material, and the inner surface (11a) is amorphous plastic material or a mixture of amorphous plastic material and polyolefine, and that between the outer surface (12) and the inner surface (11a) there is at least one intermediate layer (11b) made of some other plastic material.

9. A protective wrapping or film in accordance with one of claims 1 to 6, **characterized in that** the inner surface (111) of the protective film (100) is ordinary shrinking plastic material, and that the outer surface (112) is amorphous plastic material or a mixture of amorphous plastic material and polyolefine, and that the bundled package consisting of products (113) protected with protective films (100) is surrounded with a conventional protective wrapping (114).

FIG. 1

FIG. 2

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 009 376 (MOBIL OIL CORP.) * Claim 1; page 4, lines 1-12 * | 1-3,7 | B 32 B 27/08 |
| A | | 8,9 | B 65 D 71/08 |
| A | EP-A-0 268 422 (MOBIL OIL CORP.) * Column 1, line 1 - column 2, line 15 * | 1-4,9 | |
| A | US-A-4 695 491 (KONDO et al.) * Column 1, lines 51-62; column 2, lines 56-68; column 3, lines 39-43 * | 1,4,9 | |
| A | EP-A-0 069 495 (W.R. GRACE & CO.) * Claims 1-3 * | 1-3,7-9 | |
| A | EP-A-0 092 897 (AMERICAN CAN CO.) * Page 5, line 9 - page 9, line 16 * | 1-3,7-9 | |
| A | US-A-4 254 869 (HEIER) * Column 1, lines 21-38; column 2, lines 16-52; claims 1,4-6 * | 1,9 | TECHNICAL FIELDS SEARCHED (Int. Cl.5) |
| X | GB-A- 915 779 (E.I. DU PONT DE NEMOURS) * Claim 1; page 6, line 59 - page 7, line 24; page 7, lines 88-97 * | 1,4 | B 32 B B 65 D |
| X | GB-A-1 244 657 (IMPERIAL CHEMICAL IND.) * Page 1, lines 18-26; page 2, lines 37-69; page 3, lines 68-72 * | 1,4 | |
| A | WORLD PATENTS INDEX LATEST, Accession no. 87-195527, week 28, Derwent Publications Ltd, London, GB; & JP-A³62 124 928 (ASAHI CHEMICAL IND. K.K.) -/- | 1-4 | |

The present search report has been drawn up for all claims

| Place of search | Date of completion of the search | Examiner |
|---|---|---|
| THE HAGUE | 18-09-1990 | IBARROLA TORRES O.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 607 616  (BARBEHENN et al.) <br> * Claim 1; column 4, lines 27-52 * | 1-4 | |
| A | WORLD PATENTS INDEX, accession no. 68-16211q, week 00, Derwent Publications Ltd, London, GB; & JP-B-43 026 109 (TOYO RAYON CO., LD) | 1,4 | |
| A | US-A-3 915 933  (KOHNO et al.) <br> * Column 2, lines 28-36; column 11, lines 59-65; column 12, lines 51-53 * | 1,4 | |
| A | FR-A-2 093 589  (SUMITOMO CHEMICAL CO.) <br> * Page 1, lines 8-36; page 2, lines 11-34 * | 1-3 | |
| A | US-A-4 486 366  (REDDY) <br> * Column 1, lines 6-20; column 2, line 66 - column 3, line 22 * | 1,4 | |

TECHNICAL FIELDS
SEARCHED (Int. Cl.5)

The present search report has been drawn up for all claims

| Place of search | Date of completion of the search | Examiner |
|---|---|---|
| THE HAGUE | 18-09-1990 | IBARROLA TORRES O.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)